# EUROPÄISCHE PATENTANMELDUNG

(11) **EP 0 851 399 A1**
(43) Veröffentlichungstag der Anmeldung: **01.07.1998**
(21) Anmeldenummer: 97121608.0
(22) Anmeldetag: 08.12.1997
(51) Int. Cl.: G09B 9/04

(54) **Vorrichtung zur Simulation von am Fahrerstand eines Fahrzeugs auftretenden Bewegungen**

(30) Priorität: 23.12.1996 DE 19654112
(71) Anmelder: STN ATLAS Elektronik GmbH, D-28305 Bremen (DE)
(72) Erfinder: Prüser, Uwe, 28832 Achim (DE); Wilkens, Rolf, 28211 Bremen (DE)

(57) **Zusammenfassung**

Die Vorrichtung weist einen Grundrahmen (11), einen am Grundrahmen (11) um eine vertikale Gierachse (20) drehbares Traggestell (14), eine am Traggestell (14) gehaltene, um zwei zueinander orthogonale, horizontale Schwenkachsen (22, 25) schwenkbare Kabine (16) mit einer Nachbildung des Fahrerstandes und Drehantriebe (24, 28) zum Schwenken der Kabine (16) um Gier-, Nick- und Wankachse (20, 22, 25) auf. Zwecks Simulation von Längs- und Querbewegungen mit überlagerten, linearen Bewegungen der Kabine (16) mit möglichst kleinen Stellwegen für die Drehantriebe (24, 28) ist ein um die Nickachse (22) schwenkbarer Schwenkarm (15) in einem am Traggestell (14) ausgebildeten vertikalen Ständer (13) schwenkbar gelagert, die Wankachse (25) am Schwenkarm (15) in dessen Längsrichtung sich erstreckend festgelegt und die Kabine (16) im Längsabstand von der Nickachse (22) auf dem Schwenkarm (15) um die Wankachse (25) schwenkbar angeordnet.

## Beschreibung

Die Erfindung betrifft eine Vorrichtung zur Simulation von am Fahrerstand eines Fahrzeugs in dessen Fahrbetrieb auftretenden Bewegungen der im Oberbegriff des Anspruchs 1 definierten Gattung.

Bei einer bekannten Vorrichtung dieser Art (Technik Kraftfahrzeugwesen, Adam Zomotor:
"Fahrwerktechnik/Fahrverhalten", Vogel-Buchverlag Würzburg, 1. Auflage 1987, Seite 306) weist das Traggestell ein Gestelloberteil mit zwei beabstandeten, parallelen, kreisbogenförmigen Schienenabschnitten auf, die sich zum Schwenken der Kabine um deren Nickachse, die in dem Krümmungsmittelpunkt der Schienenabschnitte liegt, auf Lagerrollen abrollen. Die Lagerrollen sind auf einem Gestellrahmen des Traggestells befestigt, der auf dem Grundrahmen aufliegt und um die vertikale Gierachse drehbar ist und hierzu einen zur Gierachse konzentrischen Zahnkranz trägt, mit dem ein Antriebsritzel eines Drehantriebs kämmt. Die Kabine selbst ist im Gestelloberteil über zwei in gestellseitigen Drehlagern gelagerten Drehzapfen schwenkbar aufgehängt und wird ebenso wie die Schienenabschnitte mittels Servohydraulikmotoren geschwenkt. Gier-, Nick- und Schwenkachse der Kabine schneiden sich in einem Punkt, der etwa mit dem Augenpunkt des Fahrers zusammenfällt. Mit einer solchen Vorrichtung werden Längs-, Gier- und Querbeschleunigungen an einer Fahrzeugkabine eines Personen- oder Nutzkraftwagens weitgehend getreu nachgebildet. Auftretende geringe vertikale Beschleunigungen der Vorrichtung bleiben unterhalb der Wahrnehmungsgrenze des Fahrers.

Der Erfindung liegt die Aufgabe zugrunde, eine Vorrichtung der eingangs genannten Art zu schaffen, die neben der Simulation von Längs-, Gier- und Querbeschleunigungen auch überlagerte lineare Bewegungen der den Fahrerstand aufnehmenden Kabine mit möglichst kleinen Stellwegen nachbildet.

Die Aufgabe ist bei einer Vorrichtung der im Oberbegriff des Anspruchs 1 angegebenen Gattung erfindungsgemäß durch die Merkmale im Kennzeichenteil des Anspruchs 1 gelöst.

Die erfindungsgemäße Vorrichtung hat den Vorteil, daß mit kleinen Drehwinkeln der Drehantriebe große quasilineare Auslenkungen des Fahrerstandes, wie sie z.B. bei Kettenfahrzeugen oder Fahrzeugen mit weit vor der Vorderradachse liegendem Fahrerstand auftreten, realisiert werden können und zugleich auch im Fahrbetrieb am Fahrerstand auftretende Längs-, Gier- und Querbeschleunigungen simuliert werden. Die erfindungsgemäße Vorrichtung ist bezüglich ihrer Fertigungskosten konstruktiv vorteilhaft konstruiert und läßt sich mit einer geringen Bauhöhe realisieren.

Zweckmäßige Ausführungsformen der erfindungsgemäßen Vorrichtung mit vorteilhaften Weiterbildungen und Ausgestaltungen der Erfindung ergeben sich aus den weiteren Ansprüchen.

Die Erfindung ist anhand von in der Zeichnung dargestellten Ausführungsbeispielen im folgenden näher beschrieben. Es zeigen:
- Fig. 1: eine Seitenansicht einer Vorrichtung zur Simulation von am Fahrerstand eines Kettenfahrzeugs in dessen Fahrbetrieb auftretenden Bewegungungen, schematisch dargestellt,
- Fig. 2: eine Draufsicht der Vorrichtung in Richtung Pfeil II in Fig. 1,
- Fig. 3: eine Rückansicht der Vorrichtung in Richtung Pfeil III in Fig. 1,
- Fig. 4: eine perspektivische Darstellung einer modifizierten Simulationsvorrichtung.

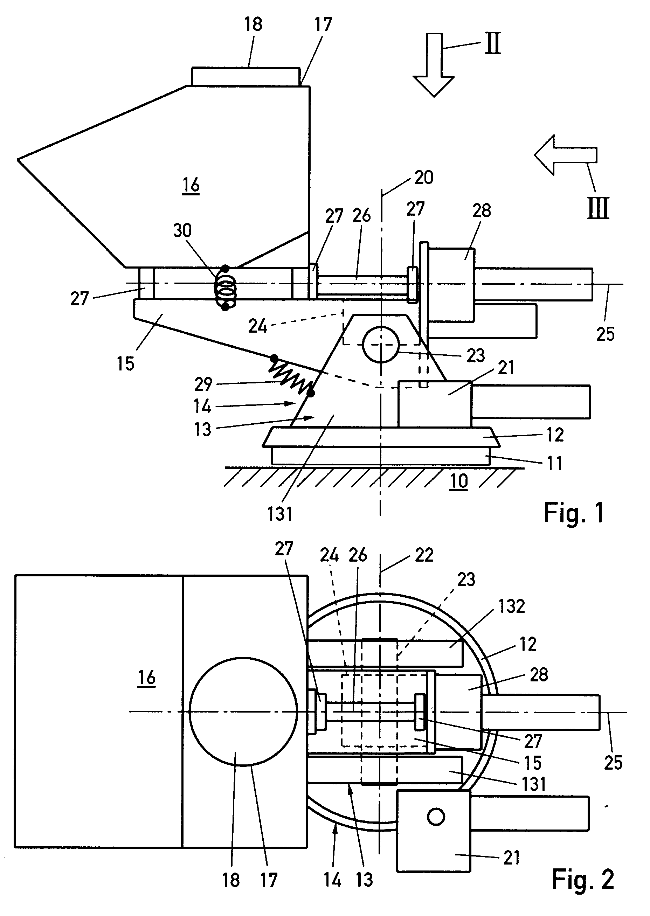

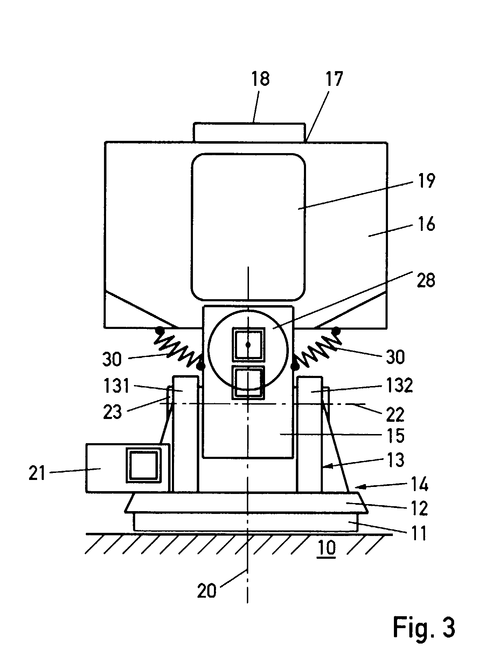

Die in Fig. 1 bis 3 in verschiedenen Ansichten schematisch dargestellte Vorrichtung zur Simulation von am Fahrerstand eines Kettenfahrzeugs in dessen Fahrbetrieb auftretenden Bewegungen umfaßt einen am Boden 10 verankerten Grundrahmen 11, ein aus Basisplatte 12 und Ständer 13 bestehendes Traggestell 14, einen Schwenkarm 15 und eine Kabine 16, in der eine hier nicht dargestellte Nachbildung des Fahrerstands des Kettenfahrzeugs aufgenommen ist. Der Zugang zur Kabine 16 ist durch eine Einstiegsluke 17 mit Lukendeckel 18 oder durch eine rückwärtige Kabinentür 19 (Fig. 3) gegeben. Das Traggestell 14 ist mit seiner Basisplatte 12 auf dem Grundrahmen 11 um eine vertikal ausgerichtete Gierachse 20 drehbar gelagert. Die Drehung der Basisplatte 12 erfolgt mittels eines elektromotorischen Drehantriebs, im folgenden Gierantrieb 21 genannt, bei welchem ein von einem Elektromotor über ein Getriebe angetriebenes Antriebsritzel, das an der Basisplatte 12 festgelegt ist, in einem am Grundrahmen 11 konzentrisch zur Gierachse 20 angeordneten, hier nicht dargestellten Zahnkranz kämmt. Der auf der Basisplatte 12 befestigte Ständer 13 umfaßt zwei im Abstand voneinander angeordnete und parallel zueinander ausgerichtete Vertikalstützen 131, 132, zwischen denen der Schwenkarm 15 um eine horizontal ausgerichtete Nickachse 22 schwenkbar aufgenommen ist. Hierzu sitzt der Schwenkarm 15 frei drehend auf einem mit der Nickachse 22 koaxialen Lagerbolzen 23, der in den beiden Vertikalstützen 131, 132 gehalten ist. Eine Schwenkung des Schwenkarms 15 erfolgt durch einen elektromotorischen Drehantrieb, im folgenden Nickantrieb 24 genannt, der auf dem Schwenkarm 15 befestigt ist und mit einem von einem Elektromotor angetriebenen Antriebsritzel eines Untersetzungsbetriebes mit einem am Lagerbolzen 23 ausgebildeten Zahnkranz kämmt. Alternativ kann der Schwenkarm 15 drehfest auf den Lagerbolzen 23 sitzen, der seinerseits in den beiden Vertikalstützen 131, 132 gelagert ist. In diesem Fall ist der Nickantrieb 24 an einer der Vertikalstützen 131, 132 befestigt und treibt z.B. über sein Antriebsritzel einen am Lagerbolzen 23 ausgebildeten Zahnkranz an. Die Aufnahme des Lagerbolzens 23 in den Vertikalstützen 131, 132 ist so getroffen, daß die mit der Lagerbolzenachse koaxiale Nickachse 22 von dem die Kabine 16 aufnehmenden Schwenkarmende aus gesehen vor der Gierachse 20 liegt, womit größere konstruktive Freiheiten bei der Schwenkarmauslegung gewonnen werden.

Die Kabine 16 ist auf dem Schwenkarm 15 um eine auf diesem in dessen Längsachse festgelegte Wankachse 25 schwenkbar angeordnet, wobei die Kabine 16 am vorderen Ende des Schwenkarms 15 angeordnet ist und einen - in Längsrichtung des Schwenkarms 15 gesehen - Abstand von der Nickachse 22 einhält. Die Größe dieses Abstandes ist nach den konstruktiven Gegebenheiten des Kettenfahrzeugs bemessen. Zur Realisierung der Wankbewegungen der Kabine 16 ist auf dem Schwenkarm 15 eine in dessen Längsrichtung sich erstreckende, mit der Wankachse 25 koaxiale Drehspindel 26 in Lagern 27 drehbar aufgenommen und das vordere Ende der Drehspindel 26 drehfest mit dem Boden der Kabine 16 verbunden. Am kabinenfernen Ende der Drehspindel 26 greift wiederum ein elektromotorischer Drehantrieb, im folgenden Wankantrieb 28 genannt, an, der wiederum aus einem Elektromotor und einem Getriebe besteht.

Zur Kompensation der Rückwirkung des Gewichts der Kabine 16 auf Nickantrieb 24 und Wankantrieb 28 ist einerseits der Schwenkarm 15 am Traggestell 14 über eine Druckfeder 29 und andererseits die Kabine 16 am Schwenkarm 15 über zwei Druckfedern 30, die symmetrisch zur Wankachse 25 angeordnet sind, abgestützt. Die Druckfedern 29 und 30 sind in Fig. 1 und 3 nur schematisch angedeutet und können beispielsweise als sog. Luftfedern ausgeführt werden. Anstelle der beiden Druckfedern 30 kann auch eine Torsionsfeder verwendet werden, die an der Drehspindel 26 oder an der Kabine 16 und am Schwenkarm angreift. Die Federkraft der Federn 29, 30 ist jeweils so bemessen, daß bei nicht eingeschaltetem Wankantrieb 28 die Kabine 16 im wesentlichen horizontal ausgerichtet ist und bei nicht eingeschaltetem Nickantrieb 24 der Schwenkarm 15 ebenfalls im wesentlichen horizontal ausgerichtet ist. Auf diese Weise müssen Wankantrieb 28 und Nickantrieb 24 nur die zum Schwenken der Kabine 16 um Wankachse 25 bzw. Nickachse 22 erforderlichen Stellkräfte aufbringen.

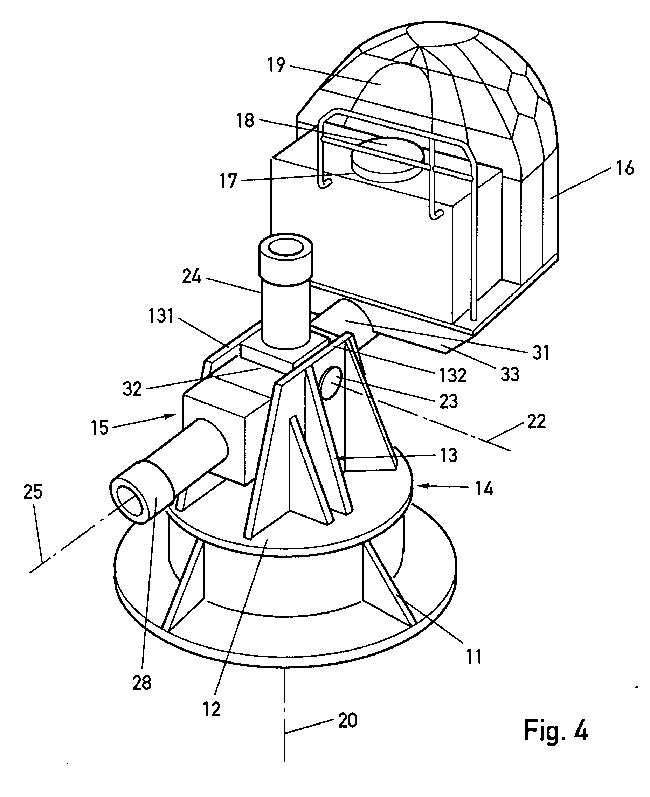

In Fig. 4 ist eine modifizierte Vorrichtung zur Simulation der im Fahrbetrieb am Fahrerstand eines Kettenfahrzeugs auftretenden Bewegungen dargestellt, die ebenfalls zum wirklichkeitsgetreuen Trainieren von Fahrern in Kettenfahrzeugen dient. Diese Vorrichtung stimmt im Aufbau und in der Funktion weitgehend mit der zu Fig. 1 bis 3 beschriebenen Vorrichtung überein, so daß gleiche Bauteile mit gleichen Bezugszeichen versehen sind. Eine Modifikation ist nur hinsichtlich der Ausbildung des Schwenkarms 15 vorgenommen. Dieser besteht aus einem Hohlrohr 31, das drehbar in einem Schwenkbacken 32 aufgenommen ist. Die Rohrachse des Hohlrohrs 31 fällt mit der Wankachse 25 der Vorrichtung zusammen. Der Schwenkbacken 32 sitzt wiederum auf dem Lagerbolzen 23, dessen Bolzenachse wiederum mit der Nickachse 22 der Vorrichtung fluchtet. Der Schwenkbacken 32 wird wiederum von dem Nickantrieb 24 und das Hohlrohr 31 von dem Wankantrieb 28 in Schwenkbewegung jeweils um ihre Achse versetzt. Die Kabine 16 ist mittels einer Tragplatte 33 am vorderen Ende des Hohlrohrs 31 befestigt. Zur Kompensation des Kabinengewichts bezüglich des Wankantriebs 28 ist im Hohlrohr 31 ein hier nicht dargestellter Torsionsstab angeordnet, der endseitig einerseits am Schwenkbacken 32 und andererseits an der Kabine 16 bzw. deren Tragplatte 33 oder am Hohlrohr 31 festgelegt ist. Zur Kompensation des Kabinen- und Schwenkarmgewichts bezüglich des Nickantriebs 24 ist in gleicher Weise wie bei der Vorrichtung gemäß Fig. 1 bis 3 eine Luftfeder vorgesehen, die den Schwenkarm 15 am Traggestell 14 abstützt.

Wie hier nicht weiter dargestellt ist, ist in der Kabine 16 in bekannter Weise ein Sichtsystem integriert, auf dessen Bilddisplay dem Fahrer ein Umgebungsszenario mit Verkehrssituationen, wie sie sich beim Fahren des Kettenfahrzeugs ergeben, wirklichkeitsgetreu sichtbar gemacht wird.

Die Erfindung ist nicht auf die vorstehend beschriebene Anwendung zum Schulen von Fahrpersonal in Kettenfahrzeugen beschränkt. Sie eignet sich darüber hinaus für alle Fahrzeuge, deren Fahrerkabine weit vor der Vorderradachse angeordnet ist.

## Patentansprüche

1. Vorrichtung zur Simulation von am Fahrerstand eines Fahrzeugs in dessen Fahrbetrieb auftretenden Bewegungen, mit einem Grundrahmen (11), mit einem am Grundrahmen (11) um eine vertikale Gierachse (20) drehbaren Traggestell (14), mit einer am Traggestell (14) gehaltenen, eine Nachbildung des Fahrerstands enthaltenden Kabine (16), die um zwei zueinander orthogonale, horizontale Schwenkachsen (Nickachse 22 und Wankachse 25) schwenkbar ist, und mit Drehantrieben (21, 24, 28) zum Schwenken der Kabine (16) um Gier-, Nick- und Wankachse (20, 22, 25), dadurch gekennzeichnet, daß ein um die Nickachse (22) schwenkbarer Schwenkarm (15) in einem am Traggestell (14) ausgebildeten vertikalen Ständer (13) schwenkbar gelagert ist, daß die Wankachse (25) am Schwenkarm (15) in dessen Längsrichtung sich erstreckend festgelegt ist und daß die Kabine (16) im Längsabstand von der Nickachse (22) auf dem Schwenkarm (15) um die Wankachse (25) schwenkbar angeordnet ist.

2. Vorrichtung nach Anspruch 1, dadurch gekennzeichnet, daß die Nickachse (22) in dem Ständer (13) so festgelegt ist, daß sie von der Kabine (16) aus gesehen im Abstand vor der Gierachse (20) liegt.

3. Vorrichtung nach Anspruch 1 oder 2, dadurch gekennzeichnet, daß der Ständer (13) zwei im Abstand voneinander angeordnete, parallele Vertikalstützen (131, 132) aufweist und daß der Schwenkarm (15) frei drehend auf einem mit der Nickachse (22) koaxialen Lagerbolzen (23) sitzt, der in den beiden Vertikalstützen (131, 132) gehalten ist.

4. Vorrichtung nach einem der Ansprüche 1 bis 3, dadurch gekennzeichnet, daß der Schwenkarm (15) mittels mindestens einer Feder (29) am Traggestell (14) abgestützt ist und daß die mindestens eine Feder (29) so ausgelegt ist, daß sie das Gewicht von Kabine (16) und Schwenkarm (15) in dessen Horizontallage kompensiert.

5. Vorrichtung nach Anspruch 4, dadurch gekennzeichnet, daß die Feder als Druckfeder, vorzugsweise als Luftfeder, ausgebildet ist.

6. Vorrichtung nach einem der Ansprüche 1 bis 5, dadurch gekennzeichnet, daß die Kabine (16) über mindestens eine Feder (30) am Schwenkarm (15) abgestützt ist und daß die mindestens eine Feder (30) so ausgelegt ist, daß sie das Gewicht der Kabine (16) bei etwa horizontal ausgerichteter Kabine (16) kompensiert.

7. Vorrichtung nach einem der Ansprüche 1 bis 6, dadurch gekennzeichnet, daß auf dem Schwenkarm (15) eine in dessen Längsrichtung sich erstreckende, mit der Wankachse (25) koaxiale Drehspindel (26) drehbar gelagert ist, die mit ihrem einen Spindelende am Boden der Kabine (16) befestigt ist.

8. Vorrichtung nach Anspruch 6 oder 7, dadurch gekennzeichnet, daß die mindestens eine Feder als zwischen der Kabine (16) und dem Schwenkarm (15) sich abstützende Druckfeder, insbesondere Luftfeder, oder als an der Drehspindel (26) und am Schwenkarm (15) angreifende Torsionsfeder ausgebildet ist.

9. Vorrichtung nach einem der Ansprüche 3 bis 6, dadurch gekennzeichnet, daß der Schwenkarm (15) aus einem auf dem Lagerbolzen (23) sitzenden Schwenkbacken (32) und einem im Schwenkbacken (32) um seine Rohrachse drehbar gelagerten Hohlrohr (31) zusammengesetzt ist, dessen Rohrachse mit der Wankachse (25) fluchtet.

10. Vorrichtung nach Anspruch 6 und 9, dadurch gekennzeichnet, daß die Feder als ein im Hohlrohr (31) angeordneter Torsionsstab ausgebildet ist, der endseitig einerseits am Schwenkbacken (32) und andererseits am Hohlrohr (31) oder an der Kabine (16) festgelegt ist.

11. Vorrichtung nach Anspruch 10 oder 11, dadurch gekennzeichnet, daß die Drehantriebe (21, 24, 28) als elektrische Stellmotoren ausgebildet sind, von denen jeweils einer über ein Getriebe den Schwenkarm (15) bzw. den Schwenkbacken (32), die Drehspindel (26) bzw. das Hohlohr (31) und das Traggestell (14) antreibt.
